Europäisches Patentamt

European Patent Office

Office européen des brevets

(11) Veröffentlichungsnummer: **0 255 469 B1**

# (12) EUROPÄISCHE PATENTSCHRIFT

(45) Veröffentlichungstag der Patentschrift: 29.05.91

(51) Int. Cl.⁵: **B60B 39/00**

(21) Anmeldenummer: 87730082.2

(22) Anmeldetag: 23.07.87

(54) **Befestigungsvorrichtung für eine Kraftfahrzeuggleitschutzvorrichtung.**

(30) Priorität: 30.07.86 DE 3625677

(43) Veröffentlichungstag der Anmeldung:
03.02.88 Patentblatt 88/05

(45) Bekanntmachung des Hinweises auf die
Patenterteilung:
29.05.91 Patentblatt 91/22

(84) Benannte Vertragsstaaten:
AT BE CH DE FR GB IT LI NL SE

(56) Entgegenhaltungen:
US-A- 2 543 876
US-A- 2 790 514
US-A- 2 865 471
US-A- 4 497 148

(73) Patentinhaber: RUD-Kettenfabrik Rieger &
Dietz GmbH u. Co.
Friedensinsel
W-7080 Aalen 1(DE)

(72) Erfinder: Hofmann, Peter
Heulenberg 76
W-7080 Aalen-Unterkochen(DE)
Erfinder: Rieger, Hansjörg, Dr.-Ing.
Saarstrasse 48
W-7080 Aalen(DE)

(74) Vertreter: Böning, Manfred, Dr. Ing. et al
Patentanwälte Dipl.-Ing. Dieter Jander Dr.
Ing. Manfred Böning Leistikowstrasse 2
W-1000 Berlin 19(DE)

## Beschreibung

Die Erfindung betrifft eine Befestigungsvorrichtung für eine Kraftfahrzeuggleitschutzvorrichtung, welche mit einem Schwenkaggregat für einen aus einer Ruhestellung in eine Betriebsstellung und zurück schwenkbaren Tragarm versehen ist, an dessen freiem Ende ein insbesondere durch den Fahrzeugreifen in eine Drehbewegung versetzbarer Rotor mit einer Vielzahl von Kettensträngen gelagert ist, die bei in der Betriebsstellung umlaufendem Rotor unter Fliehkrafteinwirkung vom Rotor weg in den Bereich der Bodenberührungsfläche eines sich drehenden Fahrzeugreifens geschleudert werden, mit mindestens einer an mehreren Stellen des Fahrzeuges anschraubbaren Anschlußplatte, an der mittels mindestens zweier im Abstand voneinander angeordneter, lösbarer Schellen ein Träger befestigt ist, der an seinem einen Ende einen Halter für die Gleitschutzvorrichtung trägt.

In der zum Stand der Technik zählenden EP-A1 0 197 902 ist eine Befestigungsvorrichtung der vorstehenden Art offenbart, bei der zwei jeweils einen ersten Schenkel eines Befestigungswinkels bildende Anschlußplatten über jeweils einen Gewindebolzen und eine Schraubhülse mit einem fahrzeugseitigen Gewindebolzen in Verbindung stehen und bei der der zweite Schenkel des Befestigungswinkels mit einem Ende einer zweiteiligen Klemmschelle verschraubt ist. Die Steifigkeit dieser Anordnung ist begrenzt, und unerwünschte Schwingungserscheinungen können nicht ausgeschlossen werden.

Bei einer anderen aus der DE-OS 29 14 366 bekannten Befestigungsanordnung sind das Schwenkaggregat und der Tragarm an einer in das Blattfederpaket zur Abfederung einer Fahrzeugachse integrierten Platte befestigt, deren Abmessungen individuell auf die Breite der Blattfedern und den Abstand der zum Befestigen des Blattfederpaketes an der Fahrzeugachse verwendeten Haltebügels abgestimmt sein müssen.

Bei einer anderen aus der US-PS 24 42 322 bekannten Lösung ist die Gleitschutzvorrichtung mittels einer ein Achsrohr umfassenden Schelle unmittelbar an der Fahrzeugachse befestigt. Diese Befestigungsart läßt sich - so einfach und mithin zweckmäßig sie auf den ersten Blick erscheinen mag - bei modernen Nutzfahrzeugen aufgrund der dort gegebenen baulichen Verhältnisse nicht mehr realisieren.

Alle bekannten Befestigungsvorrichtungen vermögen insofern nicht voll zu befriedigen, als der Grad ihrer Anpassungsfähigkeit an verschiedene Fahrzeugtypen und/oder ihre Stabilität zu wünschen übrig lassen.

Der Erfindung liegt die Aufgabe zugrunde, derartige Mängel zu eliminieren und eine aus vergleichsweise einfachen Teilen bestehende Befestigungsvorrichtung zu schaffen, die einen schnellen und sicheren Anbau einschlägiger Gleitschutzvorrichtungen an Fahrzeugen unterschiedlicher Bauart ermöglicht. Diese Aufgabe wird bei einer gattungsgemäßen Vorrichtung erfindungsgemäß dadurch gelöst, daß jede Anschlußplatte mindestens zwei Lochreihen mit jeweils zwei oder mehreren Löchern aufweist, von denen eine Lochreihe zur Befestigung jeweils einer Schelle an der jeweiligen Anschlußplatte und eine Lochreihe zur Befestigung der jeweiligen Anschlußplatte am Fahrzeug dient.

Die erfindungsgemäße Befestigungsvorrichtung läßt sich an einer geeigneten Stelle der Fahrzeugachse festschrauben, wobei zur Höheneinstellung Distanzmuttern und/oder Distanzhülsen verwendet werden können. Die lösbaren Spannschellen gestatten sowohl ein Schwenken als auch eine Längsverschiebung des Trägers mitsamt der in einer sich als zweckmäßig erweisenden Lage an dessen Halter befestigten Gleitschutzvorrichtung. Der Träger, die Schellen sowie die mit dem Fahrzeug verbundene Platte bilden ein außerordentlich stabiles Lager für den Halter und die an diesem befestigte Gleitschutzvorrichtung.

Bei Verwendung nur einer einzelnen Anschlußplatte muß diese mit einem unterschiedlichen Fahrzeugtypen entsprechenden, eine Vielzahl von Löchern aufweisenden Lochraster für zur Befestigung der Anschlußplatte dienende Schraubenbolzen versehen sein. Eine aufwendige Rasterung läßt sich vermeiden, wenn man anstelle nur einer Anschlußplatte zwei Anschlußplatten verwendet, von denen einer jeden eine Spannschelle zugeordnet ist. Auch in diesem Fall bilden die Platten und der Träger einen gewissermaßen über das Fahrzeug geschlossenen steifen Rahmen zur Lagerung der Gleitschutzvorrichtung.

Nicht minder vorteilhaft als die Verwendung zweier Platten erweist sich die Ausbildung des Halters für die Gleitschutzvorrichtung als eine eine Längsführung bildende Klemmkralle, die vorzugsweise das Schwenkaggregat der Gleitschutzvorrichtung festklemmt, nachdem es zuvor in eine funktionsgerechte Lage quer zum Träger gebracht wurde.

Weitere Einzelheiten und Merkmale der Erfindung ergeben sich aus den Unteransprüchen und der nachfolgenden Beschreibung einer in der beigefügten Zeichnung dargestellten besonders vorteilhaften Ausführungsform der Erfindung. Es zeigen:

Fig. 1    die perspektivische Ansicht einer an einem Fahrzeug angebauten Befestigungsvorrichtung samt der von dieser gehaltenen Gleitschutzvorrichtung,

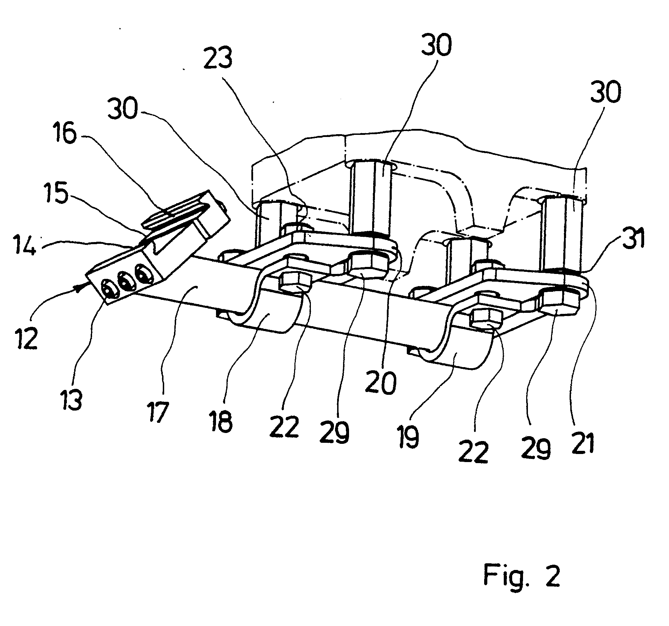

Fig. 2     die perspektivische Ansicht der Befestigungsvorrichtung gemäß Fig. 1 bei abgenommener Gleitschutzvorrichtung und

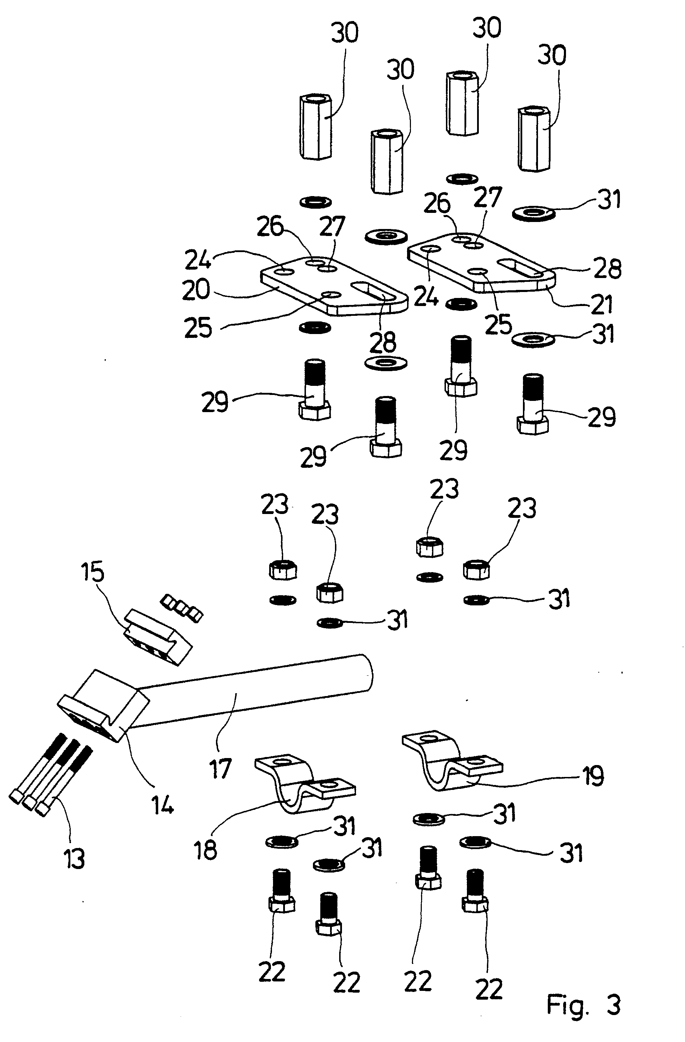

Fig. 3     eine Explosionsdarstellung der Teile der in den Fig. 1 und 2 dargestellten Befestigungsvorrichtung.

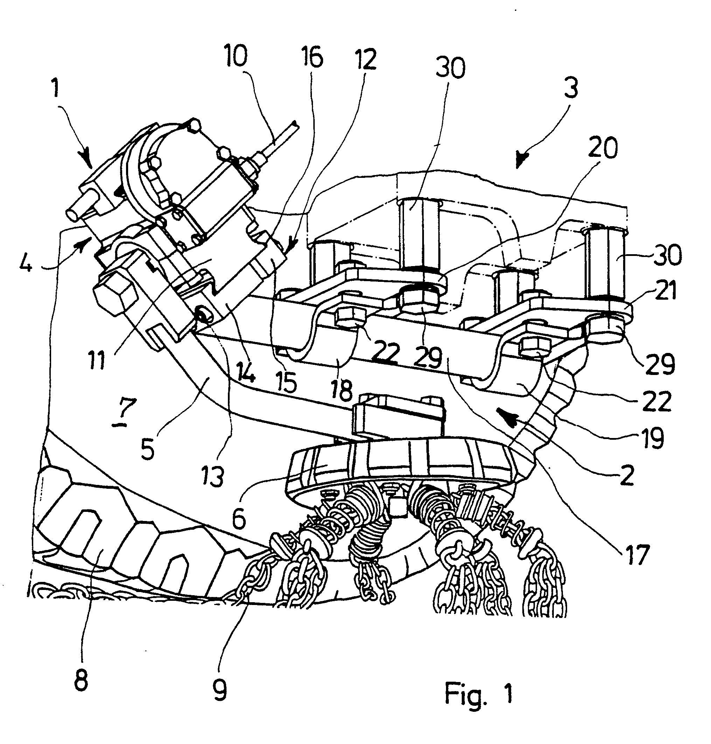

In Fig. 1 ist 1 eine Gleitschutzvorrichtung, die mittels einer Befestigungsvorrichtung 2 an Teilen eines Fahrzeuges 3 befestigt ist. Zu der Gleitschutzvorrichtung gehört ein Schwenkaggregat 4 für einen Tragarm 5, an dessen Ende ein Rotor 6 gelagert ist, der durch den Tragarm 5 gegen die Flanke 7 eines Fahrzeugreifens 8 gedrückt wird und auf diese Weise den Rotor 6 in Drehung versetzt. Am Rotor 6 sind Kettenstränge 9 befestigt, die bei umlaufendem Rotor unter Fliehkrafteinwirkung vom Rotor weg in den Bereich der Bodenberührungsfläche des sich drehenden Fahrzeugreifens 8 geschleudert werden.

Das Schwenkaggregat besteht im dargestellten Fall aus einem zweistufigen Schneckengetriebe, welches über eine flexible Welle 10 angetrieben wird. Der Fuß 11 der Ausgangsstufe des Schneckengetriebes wird von einem als Klemmkralle ausgebildeten Halter 12 gehalten, der zwei durch Schrauben 13 miteinander verbundene Klemmbacken 14 und 15 aufweist. Die Klemmbacken begrenzen eine Längsführung 16, innerhalb der der Fuß 11 des Schwenkaggregates 4 bei gelösten Schrauben 13 hin- und herverschiebbar ist, um eine Anpassung der Lage der Gleitschutzvorrichtung 1 an die räumlichen Gegebenheiten zu erleichtern.

Die Klemmbacke 14 des Halters 12 ist fest mit dem Ende eines rohrförmigen Trägers 17 verbunden, der mit Hilfe zweier Schellen 18 und 19 an zwei Anschlußplatten 20 und 21 befestigt ist. Zur Verbindung der Schellen 18 und 19 mit den Anschlußplatten 20 und 21 dienen Schrauben 22 und Muttern 23. Die Schrauben 22 passen durch Löcher 24 bzw. 25 einer ersten Lochreihe. Parallel zu dieser ersten Lochreihe verläuft eine zweite aus Löchern 26, 27 und 28 bestehende Lochreihe. Das Loch 28 der zweiten Lochreihe ist dabei als Langloch ausgebildet. Durch die Löcher 26 bis 28 passen Schrauben 29, welche in die unteren Enden von als Muttern ausgebildeten Distanzhülsen 30 einschraubbar sind. Das obere ebenfalls mit Innengewinde versehene Ende der Distanzhülsen 30 läßt sich beispielsweise auf die als Gewindebolzen ausgebildeten Enden der Haltebügel von Federpaketen der Fahrzeugfederung aufschrauben.

Mit 31 sind durchgehend Unterlegscheiben bezeichnet.

In der Praxis ist in gut 80% aller Fälle die Befestigung der Platten 20,21 an den auch als Briden bezeichneten Haltebügeln für Blattfederpakete möglich. Durch Änderung des Abstandes der Platten 20,21 voneinander kann dabei eine Anpassung an den Abstand der Haltebügel erfolgen, und die Langlöcher 28 ermöglichen eine Anpassung an die Schenkelweiten der Haltebügel. Selbstverständlich kommen auch andere Anschlußmöglichkeiten in Betracht. Durch die Längsverschieblichkeit und Drehbarkeit des Trägers 17 und die geneigte Lage des Halters 12 zur Längsachse des Trägers sowie durch die Ausbildung des Halters 12 als Längsführung 16 läßt sich die Lage der Gleitschutzvorrichtung 1 in weiten Grenzen variieren. Die beschriebene Befestigungsvorrichtung stellt mit anderen Worten einen Universaladapter für einschlägige Gleitschutzvorrichtungen dar.

## Ansprüche

1. Befestigungsvorrichtung für eine Kraftfahrzeuggleitschutzvorrichtung, welche mit einem Schwenkaggregat (4) für einen aus einer Ruhestellung in eine Betriebsstellung und zurück schwenkbaren Tragarm (5) versehen ist, an dessen freiem Ende ein insbesondere durch den Fahrzeugreifen in eine Drehbewegung versetzbarer Rotor (6) mit einer Vielzahl von Kettensträngen gelagert ist, die bei in der Betriebsstellung umlaufendem Rotor unter Fliehkrafteinwirkung vom Rotor weg in den Bereich der Bodenberührungsfläche eines sich drehenden Fahrzeugreifens geschleudert werden, mit mindestens einer an mehreren Stellen des Fahrzeuges anschraubbaren Anschlußplatte (20,21), an der mittels mindestens zweier im Abstand voneinander angeordneter, lösbarer Schellen (18,19) ein Träger (17) befestigt ist, der an seinem einen Ende einen Halter (12) für die Gleitschutzvorrichtung trägt, dadurch gekennzeichnet, daß jede Anschlußplatte (20,21) mindestens zwei Lochreihen (24,25;26, 27,28) mit jeweils zwei oder mehreren Löchern (24-28) aufweist, von denen eine Lochreihe (24,25) zur Befestigung jeweils einer Schelle (18 bzw. 19) an der jeweiligen Anschlußplatte (20 bzw. 21) und eine Lochreihe (26,27,28) zur Befestigung der jeweiligen Anschlußplatte (20 bzw. 21) am Fahrzeug (3) dient.

2. Vorrichtung nach Anspruch 1, dadurch gekennzeichnet, daß sie mit zwei Anschlußplatten (20,21) für den Träger (17) versehen ist, von denen einer jeden eine Schelle (19 bzw. 19) zugeordnet ist.

3. Vorrichtung nach Anspruch 1 oder 2, dadurch gekennzeichnet, daß die Lochreihen (24,25 bzw. 26,27,28) parallel zueinander verlaufen.

4. Vorrichtung nach einem der Ansprüche 1 bis 3, dadurch gekennzeichnet, daß ein Loch (29) der zur Befestigung der Anschlußplatte bzw. Anschlußplatten (20,21) am Fahrzeug (3) dienenden Lochreihe (26,27,28) als Langloch ausgebildet ist.

5. Vorrichtung nach einem der Ansprüche 1 bis 4, dadurch gekennzeichnet, daß die Anschlußplatte bzw. die Anschlußplatten (20,21) an vier, die Eckpunkte eines Viereckes bildenden Stellen mit dem Fahrzeug (3) verbunden ist bzw. sind.

6. Vorrichtung nach einem der Ansprüche 1 bis 5, dadurch gekennzeichnet, daß der Halter (12) eine Längsführung (16) für die Gleitschutzvorrichtung (1) aufweist.

7. Vorrichtung nach einem der Ansprüche 1 bis 6, dadurch gekennzeichnet, daß der Halter (12) als Klemmkralle ausgebildet ist.

8. Vorrichtung nach Anspruch 7, dadurch gekennzeichnet, daß die Klemmkralle (12) selbst die Längsführung bildet.

9. Vorrichtung nach Anspruch 7 oder 8, dadurch gekennzeichnet, daß die Klemmkralle (12) zwei eine Schwalbenschwanzführung formende Klemmbacken (14,15) aufweist.

10. Vorrichtung nach Anspruch 6 oder einem der Ansprüche 7 bis 9, dadurch gekennzeichnet, daß in der Längsführung (16) das Schwenkaggregat (4) der Gleitschutzvorrichtung (1) geführt ist.

11. Vorrichtung nach einem der Ansprüche 1 bis 10, dadurch gekennzeichnet, daß die Klemmkralle (12) schräg zur Längsachse des Trägers (17) angeordnet ist.

12. Vorrichtung nach einem der Ansprüche 1 bis 11, dadurch gekennzeichnet, daß der Träger (17) rohrförmig ausgebildet ist.

13. Vorrichtung nach einem der Ansprüche 1 bis 12, dadurch gekennzeichnet, daß der Träger (17) bei gelockerten Schellen (18,19) dreh- und in Längsrichtung hin- und herverschiebbar an der Anschlußplatte bzw. den Anschlußplatten (20,21) geführt ist.

14. Vorrichtung nach einem der Ansprüche 1 bis 13, dadurch gekennzeichnet, daß die Anschlußplatten (20,21) durch Distanzhülsen (30) im Abstand von Fahrzeugteilen gehalten werden, mit denen sie durch Schrauben (29) verbunden sind.

15. Vorrichtung nach Anspruch 14, dadurch gekennzeichnet, daß die Distanzhülsen (30) als Muttern ausgebildet sind.

**Claims**

1. A device for securing a motor-vehicle anti-skid device and comprising a unit (4) for pivoting a supporting arm (5) from an inoperative to an operative position and back, the free end of the arm bearing a rotor (6) adapted to be rotated more particularly by the vehicle tyre and having a number of chains which, when the rotor is rotating in the operative position, are thrown by centrifugal force away from the rotor and into the region of contact between the ground and a rotating tyre, the device also comprising a connecting plate (20, 21) for screwing to at least one of a number of places on the vehicle, a bearer (17) being secured to the connecting plate by at least two spaced-apart releasable clamps (18, 19) and at one end bearing a holder (12) for the anti-skid device, characterised in that each connecting plate (20, 21) has at least two rows of holes (24, 25; 26, 27, 28) each containing two or more holes (24 - 28), one row (24, 25) being used for securing a respective clamp (18, 19) to the respective connecting plate (20, 21) and one row (26, 27, 25) being used for securing the respective connecting plate (20, 21) to the vehicle (3).

2. A device according to claim 1, characterised in that it has two connecting plates (20, 21) for the bearer (17), a clamp (18, 19) being associated with each plate.

3. A device according to claim 1 or 2, characterised in that the rows of holes (24, 25 or 26, 27, 28) extend parallel to one another.

4. A device according to any of claims 1 to 3, characterised in that one hole (28) out of the row of holes (26, 27, 28) for securing the connecting plate or plates (20, 21) to the vehicle (3) is constructed as a slot.

5. A device according to any of claims 1 to 4, characterised in that the connecting plate or plates (20, 21) are connected to the vehicle (3) at four places constituting the corners of a quadrilateral.

6. A device according to any of claims 1 to 5, characterised in that the holder (12) has a longitudinal guide (16) for the anti-skid device (1).

7. A device according to any of claims 1 to 6, characterised in that the holder (12) is a clamping claw.

8. A device according to claim 7, characterised in that the clamping claw (12) itself constitutes the longitudinal guide.

9. A device according to claim 7 or 8, characterised in that the clamping claw (12) has two jaws (14, 15) forming a dovetail guide.

10. A device according to claim 6 or any of claims 7 to 9, characterised in that the assembly (4) for pivoting the anti-skid device (1) is guided in the longitudinal guide (16).

11. A device according to any of claims 1 to 10, characterised in that the clamping claw (12) is disposed at an angle to the longitudinal axis of the bearer (17).

12. A device according to any of claims 1 to 11, characterised in that the bearer (17) is tubular.

13. A device according to any of claims 1 to 12, characterised in that, when the clamps (18, 19) are loosened, the bearer (17) is adapted to be moved in reciprocation in rotation and in the longitudinal direction and guided along the connecting plate or plates (20, 21).

14. A device according to any of claims 1 to 13, characterised in that the connecting plates (20, 21) are held by spacer sleeves (30) at a distance from parts of the vehicle and connected thereto by screws (29).

15. A device according to claim 14, characterised in that the spacer sleeves (30) are nuts.

**Revendications**

1. Dispositif de fixation, pour un système antidérapant de véhicule automobile qui est muni d'une unité de pivotement (4) pour un bras porteur (5) qui peut pivoter d'une position de repos une position de service et vice-versa et a l'extrémité libre duquel est monté un rotor (6) qui peut être mis en mouvement de rotation, notamment par le pneumatique du véhicule, et qui est muni de plusieurs tronçons de chaînes qui, lorsque le rotor tourne en position de service, sont projetés sous l'action de la force centrifuge en éloignement du rotor dans la région de la face en contact avec le sol d'un pneumatique de véhicule qui tourne, ledit dispositif comprenant au moins une plaque de raccordement (20,21) qui peut être boulonnée en plusieurs endroits du véhicule et a laquelle est fixé, par l'intermédiaire d'au moins deux colliers amovibles (18,19) disposés à distance l'un de l'autre, un élément porteur (17) qui porte à une de ses extrémités un support (12) pour le système antidérapant, caractérisé en ce que chaque plaque de raccordement (20,21) présente au moins deux rangées de trous (24,25;26,27,28) comprenant chacune deux ou plusieurs trous (24 à 28), une rangée de trous (24,25) servant à fixer un collier respectif (18 ou 19) sur la plaque de raccordement respective (20 ou 21) et une rangée de trous (26,27,28) servant à fixer la plaque de raccordement respective (20 ou 21) sur le véhicule (3).

2. Dispositif selon la revendication 1, caractérisé en ce qu'il est muni de deux plaques de raccordement (20,21) pour l'élément porteur (17), à chacune desquelles est associé un collier (18 ou 19).

3. Dispositif selon la revendication 1 ou 2, caractérisé en ce que les rangées de trous (24,25 ou 26,27,28) s'étendent parallèlement entre elles.

4. Dispositif selon l'une des revendications 1 a 3, caractérisé en ce qu'un trou (28) de la rangée de trous (26,27,28) servant à fixer la ou les plaques de raccordement (20,21) sur le véhicule (3), est réalisé en forme de trou oblong.

5. Dispositif selon l'une des revendications 1 à 4, caractérisé en ce que la ou les plaques de raccordement (20,21) est ou sont fixées au véhicule (3) en quatre endroits qui constituent les coins d'un quadrilatère.

6. Dispositif selon l'une des revendications 1 à 5, caractérisé en ce que le support (12) présente un guidage longitudinal (16) pour le système antidérapant (1).

7. Dispositif selon l'une des revendications 1 à 6, caractérisé en ce que le support (12) est réalisé sous la forme d'une griffe de serrage.

8. Dispositif selon la revendication 7, caractérisé en ce que la griffe de serrage (12) constitue elle-même le guidage longitudinal.

9. Dispositif selon la revendication 7 ou 8, caractérisé en ce que la griffe de serrage (12) présente deux mâchoires de serrage (14,15) qui forment un guidage en queue d'aronde.

10. Dispositif selon la revendication 6 ou l'une des revendications 7 à 9, caractérisé en ce que l'unité de pivotement (4) du système antidérapant (1) est guidée dans le guidage longitudinal (16).

11. Dispositif selon l'une des revendications 1 à 10, caractérisé en ce que la griffe de serrage (12) est disposée en oblique par rapport à l'axe longitudinal de l'élément porteur (17).

12. Dispositif selon l'une des revendications 1 à 11, caractérisé en ce que l'élément porteur (17) est réalisé sous une forme tubulaire.

13. Dispositif selon l'une des revendications 1 à 12, caractérisé en ce que l'élément porteur (17), lorsque les colliers (18,19) sont desserrés, est guidé avec possibilité de rotation et de translation en va-et-vient dans le sens longitudinal contre la ou les plaques de raccordement (20,21).

14. Dispositif selon l'une des revendications 1 à 13, caractérisé en ce que les plaques de raccordement (20,21) sont maintenues par des douilles d'écartement (30) à distance de parties du véhicule auxquelles elles sont assemblées par des boulons (29).

15. Dispositif selon la revendication 14, caractérisé en ce que les douilles d'écartement (30) sont réalisées sous la forme d'écrous.

Fig. 1

Fig. 2

Fig. 3